# EUROPEAN PATENT SPECIFICATION

(11) **EP 1 313 921 B1**
(45) Date of publication and mention of the grant of the patent: **16.08.2006**
(21) Application number: 01963635.6
(22) Date of filing: 29.08.2001
(51) Int. Cl.: E02B 3/06

(54) **METHOD OF SHORE PROTECTION**
METHODE ZUM KÜSTENSCHUTZ
PROCEDE DE PROTECTION DU LITTORAL

(30) Priority: 29.08.2000 NZ 506600
(43) Date of publication of application: 28.05.2003
(73) Proprietor: Artificial Surf Reefs Limited, Raglan (NZ)
(72) Inventor: BLACK, Kerry, Peter, Hamilton (NZ)
(74) Representative: Abbie, Andrew Kenneth
(86) International application number: PCT/NZ2001/000178
(87) International publication number: WO 2002/020905

(56) References cited:
- WO-A-92/06249
- WO-A-95/23895
- FR-A- 2 788 798
- GB-A- 2 292 775
- JP-A- 4 254 607
- JP-A- 8 074 222
- US-A- 390 237
- US-A- 3 167 922
- US-A- 5 267 812
- US-A- 5 895 174
- US-A- 5 902 070
- US-B1- 6 210 072
- KUDO K ET AL: "Wave focusing by a submemrged plate" IEEE, 31 October 1988 (1988-10-31), pages 1061-1066, XP010075851

## Description

### Technical Field

This invention relates to a method of shore protection using a reef.

### Background Art

The continual impact of water against shores often causes gradual erosion of the shores over time. This erosion, caused by currents along or away from the shore gradually reduces the usable land area in the vicinity of the shoreline as the rate of material extracted from the shore by currents exceeds the material deposited. The rate of erosion may vary widely depending on the particular characteristics of the water-to-shore interaction. In the worst cases, valuable properties are endangered due to the land' between these properties and the sea being eroded away. As average temperatures continue to increase, sea levels are expected to rise, further compounding the effects of erosion.

Traditional methods of protecting a shoreline from erosion, which have achieved varying success, involve reflecting or absorbing the wave energy, either by providing a solid structure at the water to shore boundary or by inducing breaking offshore to reduce the energy of the waves as they contact the shoreline.

Many such coastal protection devices involve the formation of concrete or other resilient material blocks shaped in a particular form so as to dissipate the wave energy. These blocks are typically unattractive and may create reflection patterns in the water in the area surrounding the device, which can make the waves in the area undesirable for particular activities and even hazardous as the waves break on the structures. Furthermore, the current causing the eroding action of the water is still present, which may result in erosion at the base of the device and of the device itself, requiring periodic replacement or replenishment.

Refraction of waves over submerged structures is a well know effect. Several publications describe the use of such structures to change the characteristics of waves by refraction, but do not describe changing the average direction of waves.

In "Wave focusing by a submerged plate" (IEEE, 31 October 1998) Kudo K et al describe a method of "focusing" waves in order to generate power. A reef is positioned such that waves crossing it are refracted towards a focal point so that an undisclosed wave energy absorption device can extract energy from the waves. The reef shown in Figure 1 of this document is symmetrical and has a wave energy absorber at a central point.

Japanese Patent No. 425607 to Tatsuo et al describes focussing waves to a focal point to increase their height, and thereby provide better conditions for surfers and other recreational users of the area. As with the reefs described by Kudo, the reef is not intended to change the average direction of the waves approaching the shore to reduce erosion.

Submerged structures may also be used for purposes other than their refraction effect on waves.

US Patent No. 5,267,812 to Suzuki et al describes an upwelling-generating structure. The purpose of this structure is to move nutrient and oxygen rich water from a deep zone towards the surface of the sea. This is known to encourage sea life in the area of the structure (see column 1, lines 5-25).

The reef shown is used to promote these currents, and no consideration is given to positioning the reef so that it will refract waves so that they approach the shore at an angle less likely to cause erosion.

US Patent No. 3,167,922 describes a device for the correction of river beds by forming secondary currents. The device is not intended for use in the sea. The device described in this document deals solely with currents and has no applicability to waves.

US Patent No. 390,237 relates to a method of deepening bars at the mouths of harbours and rivers. The method described comprises forming an artificial bar as a substitute for a natural sand bar. The artificial structure is used to control the flow of flood tide currents running into the harbour or river. No mention is made of modifying the direction of travel of waves relative to a shore in order to protect the shore from erosion.

It is an object of the present invention to provide a method of shore protection which overcomes or alleviates problems in devices and methods of coastal protection at present by providing a method to reduce or eliminate erosion by addressing and correcting the causes of the erosion and which is less obtrusive to the eye and requires less maintenance, or at least to provide the public with a useful choice.

Further objects of the present invention may become apparent from the following description.

### Disclosure of the invention

The invention provides a method of protecting a shore from erosion as set out in claim 1.

Preferably, the or at least one said reef is angled relative to the average or mode direction of travel of the incoming waves at an angle between 5° to 80°.

The or at least one reef may have a convex, concave or linear profile along its length depending on the requirements for wave modification.

The or at least one reef may have a front face generally oriented towards the incoming waves and a lee face generally oriented towards the shore, wherein the lee face is substantially shorter than the front face.

The lee face may be substantially vertical and the front face may extend downwardly forward from the lee face generally in the direction of the incoming waves.

Preferably, the front face may be selected from a convex, concave or linear surface depending on a required shape of waves travelling over the reef.

Preferably, the method may include selecting the orientation and/or dimensions of the or at least one reef using refraction and diffraction analysis.

Preferably, the orientation of the or at least one reef may be determined using statistical analysis.

Preferably, the or at least one reef may have a height above the floor of the body of water of at least one metre.

Preferably, the method may include locating a plurality of said reefs adjacent to the shore and spaced apart along the shore until a required portion of the shore has at least one reef substantially adjacent to it.

Preferably, the method may include locating a further plurality of said reefs adjacent to a shore portion, wherein the incoming waves pass over at least two of said reefs before reaching the shore, wherein the required wave direction modification is achieved cumulatively as the waves pass over the said at least two reefs.

Preferably, the method may include locating the or at least one reef in water having a depth substantially between 2 to 15 meters.

Preferably, the required wave direction may be more closely perpendicular to the line of the shore than said average or mode direction of travel of the incoming waves.

Preferably, the or at least one may be constructed from geotextile bags, which may be pumped full of particulate material, preferably sand.

Further aspects of the present invention, which should be considered in all its novel aspects, may become apparent from the following description, given by way of example only and with reference to the accompanying drawings.

### Brief Description of Drawings

FIG 1 shows an orthographic view of a portion of a reef located on a sea bed according to one embodiment of the present invention.
FIGS 2a-c show a schematic representation of a plan view of a convex, concave and linear profile reef respectively.
FIG 3 shows a schematic representation of the range of angles which a reef may preferably be placed relative to the direction of travel of incoming waves.
FIGS 4a-c show three possible cross-sections of reefs suitable for the present invention.

### Modes for Carrying Out the Invention

The present invention relates to a method of protecting a shore from erosion. The method involves placing a reef on the water floor, the reef located, oriented and dimensioned to modify the direction of travel of waves destined for the shoreline. By modifying the wave direction, the water to shore interaction may be modified to reduce erosion.

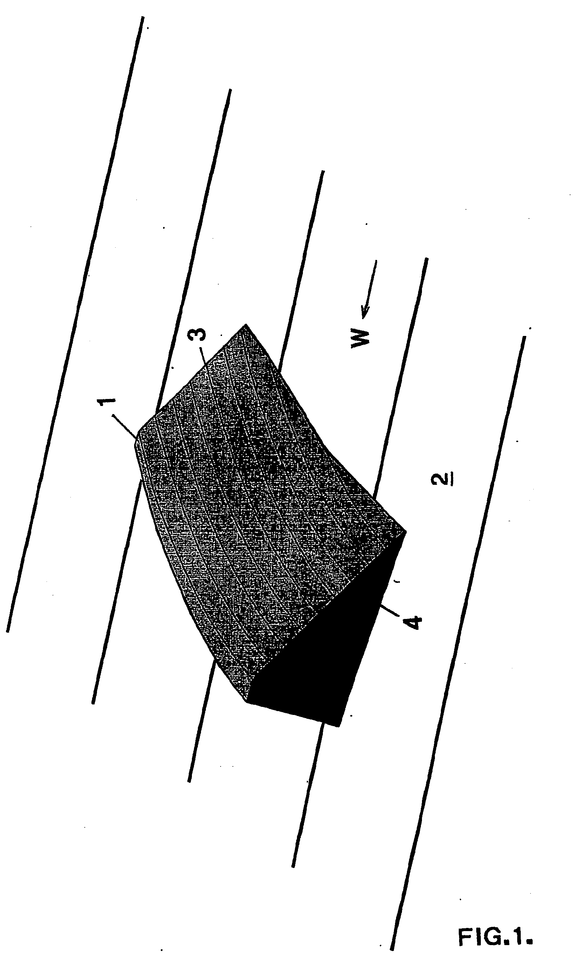

Referring to the accompanying drawings, Figure 1 shows an orthographic view of a portion of a reef 1 located on a floor of a body of water. The floor may be a sea bed 2. The reef 1 includes an elongate member oriented at a pre-selected angle to the direction of travel of the waves approaching the reef 1. The direction of travel of the waves is referenced in Figure 1 by arrow W. The reef 1 is located adjacent to the shore at a distance therefrom depending on the particular requirements for the shore. In practice, reefs may be typically placed anywhere from 20 to 1000 metres from the shore.

As a wave approaches the reef 1, the right hand side of the wave will contact the front end 3 of the reef 1 first. As the presence of the reef 1 acts to shallow the depth of water, the speed of the wave travelling over the end 3 begins to slow. The portion of the wave-front opposite end 4 continues travelling at the same speed until it reaches reef 1. The relative change in speed of travel of the portions of the wave-front causes the wave-front to be refracted towards the right as it travels towards the shore.

This change in direction of travel of the waves, properly selected, can result in less erosion of the shoreline. For example, if the waves approach the shoreline at an angle closer to the perpendicular, currents moving along the shoreline may be reduced.

Three important factors that influence the design of the reef 1 are the offshore wave climate, water depth and coastal orientation. Because the wave refraction effect will vary with water depth and reef elevation above the seabed, it will be necessary to align the reef in each environment to achieve the desired outcome of aligning the waves more closely with the coastal orientation. Wave angle relative to the shoreline at the point where the wave breaks is a factor that determines the strength of the currents inside the surf zone. It may be necessary to use computer modelling to align the reef so that wave angles at the breakpoint are modified to achieve the desired aim of reducing or negating the longshore-currents which cause erosion. It will be necessary to ensure that the problem of variability in the wave climate and variations in open coast wave heights and angles are accounted for by aligning the reef so that the average of all the longshore currents resulting from each natural condition is reduced or negated. The reef 1 would normally be placed beyond the natural breakpoint so that the angles can be modified prior to reaching this zone. However, some reefs may be placed inside the breakpoint when the waves have widely varying heights.

The present invention can accommodate for varying shoreline angles relative to incoming wave direction by providing a plurality of reefs 1 located adjacent to each other and designing each reef to modify the direction of travel of the waves depending on the orientation of the shoreline relative to the direction of travel of the incoming waves. The plural reefs may be interconnected, but act as different reefs as the orientation and size varies along the shore.

When selecting the orientation of the reef 1, consideration should be given to any "end effects° which may result. For example, if the wave angle is modified so as to substantially eliminate erosion along a first portion of the shore, another portion of the shoreline may degrade due to no longer having a feed of material from the first portion. In this case, a balance may be struck, by reducing the erosion along one portion while still providing sufficient material for the second portion.

The reef 1 may be typically located in water depths of 2 meters to 15 meters and project upwards by at least 1 meterfrom the sea bed 2. The extent of projection upwards is selected according to the requirements for the shore and may project up to the surface of the water. The reef 1 should not normally extend above the water line, as this will create a block to the waves rather than modifying the direction of travel and optionally the shape of the waves as they pass over the reef.

The reef 1 may be constructed from any material that is stable on the sea bed 2. In a preferred form, the reef 1 may be formed from geotextile bags that are pumped full of sand or other particulate material and laid to form the required shape. Alternatively, the reef 1 may be constructed from rocks, concrete, or any other durable material.

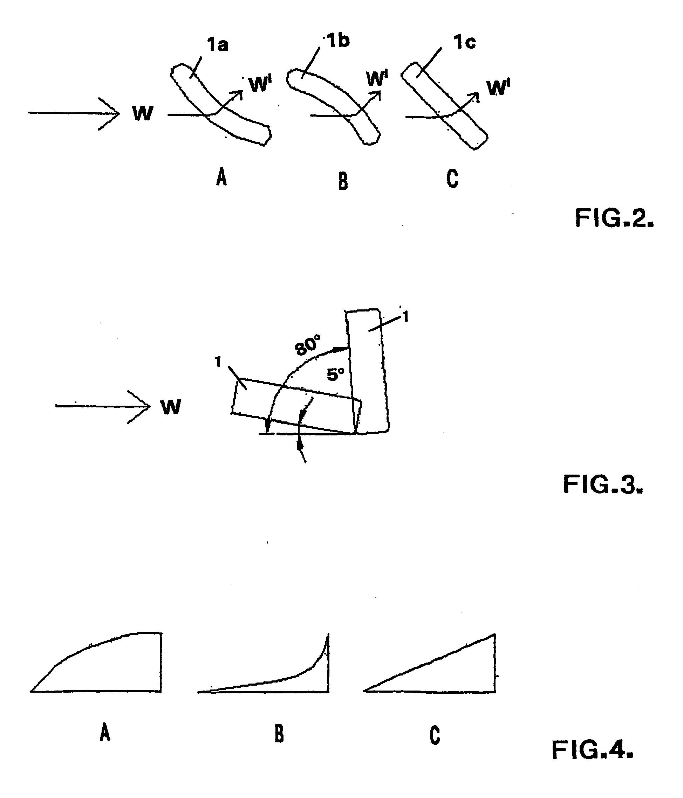

Referring to Figures 2a-c, a schematic representation of three embodiments 1a, 1b and 1c of a reef are shown. Each reef 1 is oriented at a predetermined angle relative to the direction of travel of the wave W and act to change the direction of travel of the wave to a new direction W. Figure 2a shows a convex reef 1a relative to direction W, Figure 2b shows a concave reef 1b and Figure 2c shows a linear reef 1 c. The shape of the reef 1 may be selected according to whether the waves need to be diffracted, converged, or maintained at their current energy. It will be appreciated by those skilled in the art, that the profile of the reff 1 may be varied widely depending on the particular requirements of the shore to which the reef 1 is to protect.

Figure 3 shows a preferred range of orientations which the reef 1 may be oriented relative to the direction of travel of the wave W. The actual angle selected depends on the required direction of the wave after it passes over the reef 1, but as shown in Figure 3 will typically be selected from angles between 5° to 80° relative to direction of travel of the wave W. Generally, the more the reef 1 is angled towards the orthogonal to the direction of travel along the wave front, the less the direction of travel of the wave will be changed. Variations in the height of the reef 1 along its length may be used in combination with the angle of the reef to influence the direction of travel of the waves. In one embodiment, the longitudinal axis of the reef 1 may be oriented substantially orthogonal to the direction of travel of the waves so as to rely solely on the height variation (or depth change) to refract the waves. However, less options for wave shape modification may be available if such a reef were used.

Multiple reefs 1 may be placed in series (i.e. along the direction of travel of the wave W) to fine-tune the wave direction or wave shape or to provide a cumulative effect if larger changes are required. Also, multiple reefs 1 may be provided in parallel along the shore until the required portion of the shore has a reef substantially adjacent to it. This may be useful for protecting extended portions of shore.

Figures 4A-C show three examples of possible cross-sections of the reef 1. The cross-section of reef 1 may be varied depending on the required wave shape. For example, the reef 1 may have a cross-section, which is selected to encourage the formation of waves suitable for surfing. The height of the reef 1 may also be varied along its length to influence the direction of travel of the wave and modify the properties of the wave as required. The reef shown in Figure 4A will cause the wave breaking to be most intense on the steepest segment at the deeper part of the reef, and this will act primarily on larger waves. The reef shown in Figure 4B will cause the wave to shoal slowly, but break abruptly on the steeply rising segment, thereby creating an intense breaking wave during smaller wave conditions. The reef shown in Figure 4C will result in the breaking intensity to not vary due to seabed slope factors, but the wave height and period will separately determine wave breaking intensity.

To protect a shoreline from erosion, an appropriate reef 1 needs to be selected and its orientation also selected. This may be achieved by performing computer modelling of the shore-line and wave patterns to find the required orientation, profile and cross section of the reef 1. As wave direction is variable, a statistical analysis may be performed to establish the optimum orientation. In one embodiment, the method of determining the orientation of the reef 1 may be dependent on the average or mode direction of travel of incoming waves.

By way of example, a shoreline may be experiencing erosion adjacent to a natural headland. The currents generated by the waves may sweep down the headland and along the beach, carrying sand away and causing erosion. A solution would be a reef that rotates the waves at the downstream end of the beach. This rotation would negate the currents and cause at least a partial block to the sediment movement The sediment would then be expected to collect in the zone of low flows and to create a beach salient (like a bulge-in the width of the beach). Further build up of sand would then collect on the upstream side of the salient. The input variables may include the wave climate describing the long-term distributions of wave angles in deep water offshore and the corresponding wave height Usually computer models would be used to account for refraction and height transformation over the natural seabed contours to the offshore tip of the reef. The same models would then be used to assess the rotation and height modification over the reef, and the reef would be adjusted (e.g. reef angle, height above the seabed, volume, width, length, offshore positioning and depth of reef crest) to achieve the desired outcome of negating the currents in the surf zone along the shoreline.

Thus, there is provided a method of shore protection which modifies the direction of travel of waves and/or wave properties using a reef and which may be located below the water line.

## Claims

1. A method for protecting a shore from erosion by reducing longshore currents resulting from incoming waves, the method comprising the following steps:
a) determining an average or mode direction of travel of the incoming waves;
b) determining a required direction of the waves approaching the shore which direction is selected to obtain the desired reduction of longshore currents;
c) placing at least on elongate reef on the floor of a body of water adjacent to the shore, wherein the or each reef is oriented at a preselected angle relative to the average or mode direction of travel of the incoming waves and has pre-selected dimensions selected to refract waves travelling these over such that the or each reef, or a plurality of said reefs cumulatively, modify the direction of travel of the incoming waves to said required direction.

2. The method of claim 1, wherein the or at least one said reef is located so as to be angled relative to said average or mode direction of travel of the incoming waves at an angle between 5° to 80°.

3. The method of either claim 1 or claim 2, wherein the or at least one said reef has a convex, concave or linear profile along its length depending on the requirements for wave modification.

4. The method of any one of the preceding claims, wherein the or at least one said reef provided has a front face generally oriented towards the incoming waves and a lee face generally oriented towards the shore, wherein the lee face is substantially shorter than the front face.

5. The method of claim 4, wherein the lee face is substantially vertical and the front face extends downwardly forward from the lee face generally in the direction of the incoming waves.

6. The method of claim 5, wherein the front face is selected from a convex, concave or linear surface depending on a required shape of waves travelling over the reef.

7. The method of any one of the preceding claims, further including selecting the orientation and/or dimensions of the or at least one reef using refraction analysis.

8. The method of any one of the preceding claims, wherein the orientation of the or at least one said reef is determined using statistical analysis.

9. The method of any one of the preceding claims, wherein the or at least one said reef has a height above the floor of the body of water of at least one metre.

10. The method of any one of the preceding claims, comprising locating a plurality of said reefs adjacent a portion of said shore such that the incoming waves pass over at last two said reefs before reaching the shore portion and the required wave direction modification is achieved cumulatively as the waves pass over said at least two reefs.

11. The method of any one of claims 1 to 9, including locating a plurality of said reefs adjacent to the shore and spaced apart along the shore until a required portion of the shore has at least one reef substantially adjacent to it.

12. The method of claim 11, further including locating a further plurality of said reefs adjacent to the shore potion, wherein the incoming waves pass over at least two of said reefs before reaching the shore and wherein the required wave direction modification is achieved cumulatively as the waves pass over the said at least two reefs.

13. The method of any one of the preceding claims, including locating the or at least one reef in water having a depth substantially between 2 to 15 metres.

14. The method of any one of the preceding claims, wherein the required wave direction is more closely perpendicular to the line of the shore than said average or mode direction of travel of the incoming waves

15. The method of any one of the preceding claims, wherein the or at least one reef has an interior filled with a particulate material.

16. The method of claim 15, including the or at least one said reef having geotextile material containing the particulate material.

17. The method of claim 16, wherein the particulate material is sand.

18. The method of any one of the preceding claims, wherein the height of the or at least one reef varies along its length so as to refract waves travelling thereoever.

19. The method of any one of the preceding claims, including locating a said reef towards a first end of a shore that requires protection against erosion, wherein the shore has longshore currents and the first end is the end of the shore downstream of the longshore currents.

## Patentansprüche

1. Verfahren zum Schutz eines Ufers vor Erosion durch Vermindern der Küstenströme, welche sich aus anlaufenden Wellen ergeben, wobei das Verfahren folgende Schritte umfasst:
a) Ermitteln des Durchschnitts oder modalen Laufrichtung der anlaufenden Wellen;
b) Ermitteln einer erforderten Richtung der dem Ufer nahenden Wellen, wobei jene Richtung so gewählt wird, dass die gewünschte Verminderung der Küstenströme erreicht wird;
c) Anordnen von mindestens einem langgestreckten künstlichen Riff auf dem Grunde eines Wasserkörpers nahe dem Ufer, wobei das oder jedes der Riffe in einem vorbestimmten Winkel relativ zur mittleren oder modalen Laufrichtung der anlaufenden Wellen ausgerichtet ist und vorbestimmte Abmessungen hat, die gewählt sind, um darüber hinweglaufende Wellen in einer solchen Weise zu brechen, dass das oder jedes der Riffe oder eine Vielzahl jener Riffe in ihrer Gesamtheit die Laufrichtung der anlaufenden Wellen in die besagte erforderte Richtung verändern.

2. Verfahren von Anspruch 1, wobei das oder das mindestens eine Riff so angeordnet ist, dass es relativ zur mittleren oder modalen Laufrichtung der anlaufenden Wellen in einem Winkel von 5° bis 80° ausgerichtet ist.

3. Verfahren nach Anspruch 1 oder 2, wobei das oder das mindestens eine Riff ein konvexes, konkaves oder geradliniges Profil über seine Länge hat, je nach den Anforderungen im Hinblick auf die Wellenbeeinflussung.

4. Verfahren noch einem der voranstehenden Ansprüche, wobei das oder das mindestens eine Riff eine Vorderseite aufweist, welche im allgemeinen in Richtung der anlaufenden Wellen ausgerichtet ist, sowie eine abgewandte Seite aufweist, welche im allgemeinen in Richtung auf das Ufer ausgerichtet ist, und wobei die abgewandte Seite wesentlich kürzer als die Vorderseite ist.

5. Verfahren nach Anspruch 4, wobei die abgewandte Seite im Wesentlichen senkrecht verläuft und sich die Vorderseite von der abgewandten Seite nach abwärts und zugleich vorn im wesentlichen in Richtung auf die anlaufenden Wellen erstreckt.

6. Verfahren nach Anspruch 5, wobei die Vorderseiten-Oberfläche entweder konvex, konkav oder linear gestaltet ist, je nachdem, welche Form durch die über das Riff laufenden Wellen erforderlich ist.

7. Verfahren nach einem der voranstehenden Ansprüche, welches weiterhin die Wahl der Richtung und/oder der Abmessungen des oder der Riffe unter Anwendung der Ergebnisse der Untersuchung der Brechung umfasst.

8. Verfahren nach einem der voranstehenden Ansprüche, wobei die Ausrichtung des oder der Riffe unter Anwendung einer statistischen Analyse ermittelt wird.

9. Verfahren nach einem der voranstehenden Ansprüche, wobei das oder die Riffe eine Höhe über den Grund des Wasserkörpers von mindestens einem Meter haben.

10. Verfahren nach einem der voranstehenden Ansprüche, welches die Anordnung einer Vielzahl jener Riffe nahe einem Abschnitt des Ufers in einer solchen Weise umfasst, dass die anlaufenden Wellen über mindestens zwei jener Riffe hinweglaufen, bevor sie den Uferabschnitt erreichen, sowie, dass die erforderliche Beeinflussung der Wellenrichtung summarisch erreicht wird, wenn die Wellen über jene mindestens zwei Riffe hinweglaufen.

11. Verfahren nach einem der Ansprüche 1 bis 9, welches umfasst die Anordnung einer Vielzahl von jenen Riffen nahe am Ufer und im gegenseitigen Abstand voneinander entlang des Ufers, bis ein gewünschter Abschnitt des Ufers mindestens ein Riff im Wesentlichen in seiner Nähe hat.

12. Verfahren nach einem der Ansprüche 1 bis 9, welches weiterhin die Anordnung einer weiteren Vielzahl von jenen Riffen nahe dem Uferabschnitt umfasst, wobei die anlaufenden Wellen über mindestens zwei dieser Riffe hinweglaufen, bevor sie das Ufer erreichen, und wobei die erforderliche Beeinflussung der Wellenrichtung summarisch erreicht wird, wenn die Wellen über jene mindestens zwei Riffe hinweglaufen.

13. Verfahren nach einem der voranstehenden Ansprüche, welches die Anordnung des oder des mindestens einen Riffs in Wasser, welches eine Tiefe von im wesentlichen zwischen 2 und 15 Meter hat, umfasst.

14. Verfahren nach einem der voranstehenden Ansprüche, wobei die erforderte Wellenrichtung näher an der Senkrechten zur Uferlinie liegt, als die mittlere oder. modale Laufrichtung der anlaufenden Wellen.

15. Verfahren nach einem der voranstehenden Ansprüche, wobei das oder das mindestens eine Riff ein Inneres aufweist, welches mit einem partikulären Material gefüllt ist.

16. Verfahren nach Anspruch 15, welches umfasst, dass das oder das mindestens eine Riff ein geotextiles Material beinhaltet, welches das partikuläre Material aufnimmt.

17. Verfahren nach Anspruch 16, wobei das partikuläre Material Sand ist.

18. Verfahren nach einem der voranstehenden Ansprüche, wobei sich die Höhe des oder der Riffe über seine Länge in einer solchen verändert, dass die darüber hinweglaufenden Wellen gebrochen werden.

19. Verfahren nach einem der voranstehenden Ansprüche, welches einschließt, dass ein derartiges Riff in Richtung eines und in Nähe von einem ersten Ende eines Ufers, welches des Schutzes gegen Erosion bedarf, angeordnet wird, wobei das Ufer durch Küstenströmungen **gekennzeichnet** ist, und dieses erste Ende jenes Ende des Ufers ist, welches stromabwärts der Küstenströmungen liegt.

## Revendications

1. Procédé pour protéger un rivage de l'érosion en diminuant des courants littoraux résultant de vagues montantes, procédé comprenant les étapes suivantes consistant à :
a) déterminer une direction moyenne ou modale de déplacement des vagues montantes ;
b) déterminer une direction requise des vagues approchant le rivage, direction qui est choisie pour obtenir la diminution souhaitée des courants littoraux ;
c) placer au moins un récif allongé sur le fond d'une masse d'eau adjacente au rivage, dans lequel le ou chaque récif est orienté selon un angle prédéterminé par rapport à la direction moyenne ou modale de déplacement des vagues montantes et possède des dimensions prédéterminées pour réfracter les vagues se déplaçant au-dessus, de sorte que le ou chaque récif, ou une pluralité desdits récifs modifie de manière cumulative la direction de déplacement des vagues montantes selon ladite direction requise.

2. Procédé selon la revendication 1, dans lequel ledit ou au moins un desdits récifs est placé de façon à être orienté selon un angle, par rapport à ladite direction moyenne ou modale de déplacement des vagues montantes, compris entre 5° et 80°.

3. Procédé selon la revendication 1 ou 2, dans lequel ledit ou au moins un desdits récifs présente sur sa longueur un profil convexe, concave ou linéaire en fonction des exigences de la modification des vagues.

4. Procédé selon l'une quelconque des revendications précédentes, dans lequel ledit ou au moins un desdits récifs fourni présente une face avant généralement orientée vers les vagues montantes et une face sous le vent généralement orientée vers le rivage, dans lequel la face sous le vent est beaucoup plus courte que la face avant.

5. Procédé selon la revendication 4, dans lequel la face sous le vent est essentiellement verticale et la face avant s'étend vers le bas en avant de la face sous le vent, généralement dans la direction des vagues montantes.

6. Procédé selon la revendication 5, dans lequel la surface de la face avant est convexe, concave ou linéaire en fonction d'une forme requise de vagues se déplaçant au-dessus du récif.

7. Procédé selon l'une quelconque des revendications précédentes, qui comprend en outre le choix de l'orientation et/ou des dimensions du ou d'au moins un récif grâce à une analyse de la réfraction.

8. Procédé selon l'une quelconque des revendications précédentes, dans lequel l'orientation dudit ou d'au moins un desdits récifs est déterminée grâce à une analyse statistique.

9. Procédé selon l'une quelconque des revendications précédentes, dans lequel ledit ou au moins un desdits récifs présente une hauteur au-dessus du fond de la masse d'eau d'au moins un mètre.

10. Procédé selon l'une quelconque des revendications précédentes, comprenant la mise en place d'une pluralité desdits récifs adjacents à une partie dudit rivage, de sorte que les vagues montantes passent au-dessus d'au moins deux desdits récifs avant d'atteindre la partie du rivage, et que la modification de la direction requise des vagues est obtenue de manière cumulative avec le passage des vagues au-dessus desdits au moins deux récifs.

11. Procédé selon l'une quelconque des revendications 1 à 9, comprenant la mise en place d'une pluralité desdits récifs adjacents au rivage et espacés le long du rivage de sorte qu'une partie requise du rivage a au moins un récif essentiellement adjacent à lui.

12. Procédé selon la revendication 11, comprenant en outre la mise en place d'une autre pluralité desdits récifs à côté d'une partie du rivage, dans lequel les vagues montantes passent au-dessus d'au moins deux desdits récifs avant d'atteindre le rivage et dans lequel la modification de la direction requise des vagues est obtenue de manière cumulative avec le passage des vagues au-dessus desdits au moins deux récifs.

13. Procédé selon l'une quelconque des revendications précédentes, comprenant la mise en place du ou d'au moins un récif dans une eau ayant une profondeur comprise essentiellement entre 2 et 15 mètres.

14. Procédé selon l'une quelconque des revendications précédentes, dans lequel la direction requise des vagues est bien plus perpendiculaire à la ligne du rivage que ladite direction moyenne ou modale du déplacement des vagues montantes.

15. Procédé selon l'une quelconque des revendications précédentes, dans lequel le ou au moins un récif est rempli d'une matière particulaire.

16. Procédé selon la revendication 15, comprenant ledit ou au moins un desdits récifs qui contient une matière géotextile contenant la matière particulaire.

17. Procédé selon la revendication 16, dans lequel la matière particulaire est du sable.

18. Procédé selon l'une quelconque des revendications précédentes, dans lequel la hauteur du ou d'au moins un récif varie sur sa longueur de façon à réfracter les vagues qui se déplacent au-dessus.

19. Procédé selon l'une quelconque des revendications précédentes, comprenant la mise en place dudit récif vers une première extrémité du rivage qui nécessite une protection contre l'érosion, dans lequel le rivage présente des courants littoraux et la première extrémité est l'extrémité du rivage en aval des courants littoraux.
